# EUROPÄISCHE PATENTSCHRIFT

(11) **EP 3 831 669 B1**
(45) Veröffentlichungstag und Bekanntmachung des Hinweises auf die Patenterteilung: **31.07.2024**
(21) Anmeldenummer: 20182591.6
(22) Anmeldetag: 19.06.2020
(51) Int. Cl.: B60R 19/34

(54) **SICHERHEITSSTRUKTUR IN EINEM HECKBEREICH EINES CAMPINGFAHRZEUGS, CAMPINGFAHRZEUG MIT EINER SOLCHEN SICHERHEITSSTRUKTUR SOWIE HECKSTRUKTUR**
SAFETY STRUCTURE IN A REAR AREA OF A CAMPING VEHICLE, CAMPING VEHICLE WITH SUCH A SAFETY STRUCTURE AND REAR STRUCTURE
STRUCTURE DE SÉCURITÉ DANS UNE ZONE ARRIÈRE D'UN VÉHICULE DE CAMPING, VÉHICULE DE CAMPING DOTÉ D'UNE TELLE STRUCTURE DE SÉCURITÉ AINSI QUE STRUCTURE ARRIÈRE

(30) Priorität: 19.06.2019 DE 102019116698
(43) Veröffentlichungstag der Anmeldung: 09.06.2021
(73) Patentinhaber: HYMER Business Development GmbH, 88339 Bad Waldsee (DE)
(72) Erfinder: Kaiser, Ria, 21077 Hamburg (DE); Kasten, Ole, 21680 Stade (DE); Weltjen, Martin, 21726 Oldendorf (DE); Wulf, Mathis, 21680 Stade (DE)
(74) Vertreter: Müller Schupfner & Partner Patent- und Rechtsanwaltspartnerschaft mbB (Muc)

(56) Entgegenhaltungen:
- DE-B4- 112006 000 425
- US-A- 3 799 597
- US-A- 5 711 561

## Beschreibung

Die Erfindung betrifft eine Sicherheitsstruktur in einem Heckbereich eines Campingfahrzeugs nach dem Oberbegriff des Patentanspruchs 1, ein Campingfahrzeug mit einer solchen Sicherheitsstruktur sowie eine Heckstruktur.

Unter einem Campingfahrzeug wird vorliegend ein Wohnmobil oder ein Wohnwagen verstanden, also vorzugsweise diejenigen Fahrzeuge oder Anhänger, bei denen ein Nutzer eine Möglichkeit zum Schlafen oder Wohnen in diesem Fahrzeug hat. Eine Motorisierung der Fahrzeuge ist nicht erforderlich. Eine andere Bezeichnung für ein Wohnmobil ist zum Beispiel ein Reisemobil oder Freizeitmobil. Ein Wohnwagen kann zum Beispiel alternativ als Caravan oder Campinganhänger bezeichnet werden. Campingfahrzeuge werden alternativ auch Freizeitfahrzeuge genannt.

Im Stand der Technik ist es bekannt, dass zum Schutz von Insassen oder Energieträgern Crashstrukturen im Heckbereich von PKWs angeordnet sind. Im Stand der Technik von Wohnmobilen ist es bekannt, Heckwände einteilig oder mehrteilig auszuführen.

Wohnmobile weisen im Gegensatz zu Kastenwagen oder Pkws keine definierte Crashzone im Heckbereich auf. Der Grund hierfür ist die Rahmenverlängerung mit dem Sonderelement der wohnmobiltypischen Stauraumwanne bzw. Garagenwanne. Die Stauraumwanne bzw. Garagenwanne ist zwischen Stoßfänger und den Längsträgern des Chassis bzw. Fahrgestells angeordnet. Die Rahmenverlängerung ist mit Längsträgern des Rahmens bzw. des Fahrgestells verbunden.

Da die Stoßstange bzw. der Leuchtenträger mit der Heckwand verbunden bzw. teilweise in diese integriert ist, und die Heckwand mit den Seitenwänden und der Garagenwanne verbunden ist, wird bei einem Heckaufprall die übertragene Energie auch auf den Möbelaufbau weitergeleitet. Hierdurch können sich Möbelaufbauten und/oder der Aufbau lösen und zu Gefährdungen führen.

Die Druckschrift DE 10 2016 006 864 A1 offenbart eine Fahrgast-Sicherheitskabine für Wohnmobile.

Aus der DE 11 2006 000 425 B4 ist eine Fahrzeugendabschnittstruktur mit einem Querträger und Verformungselementen für den Kollisionsfall bekannt.

Es ist eine Aufgabe der vorliegenden Erfindung, die Folgen eines Heckaufpralls bei Campingfahrzeugen zu mildern, wodurch die Sicherheit für die Fahrzeuginsassen des Campingfahrzeugs gesteigert wird. Es ist eine weitere Aufgabe der vorliegenden Erfindung, bei Campingfahrzeugen für den Heckbereich eine Entkopplung zwischen einem Deformationsbereich, welcher auch Knautschzone genannt wird, und einem Möbelaufbaubereich zu erzielen. Hierbei wird unter dem Möbelaufbaubereich derjenige Bereich des Campingfahrzeugs, insbesondere der Heckstruktur bzw. der Heckwand, verstanden, welcher an die Wohnzelle im Inneren des Campingfahrzeugs angrenzt. Es ist ferner eine Aufgabe der Erfindung, die Reparaturaufwände bzw. -kosten zu senken.

Diese Aufgabe wird durch ein Campingfahrzeug mit den Merkmalen des unabhängigen Patentanspruchs 1 gelöst. Vorteilhafte Weiterbildungen der Erfindung sind in den Unteransprüchen angegeben.

Ein Kerngedanke der Erfindung besteht darin, die Sicherheitsstruktur so in dem Heckbereich des Campingfahrzeugs anzuordnen, dass bei einem gewöhnlichen Auffahrunfall, bei dem lediglich ein unterer Teil des Heckbereichs von einem Fahrzeug getroffen wird, die übertragene kinetische Energie komplett auf die Rahmenverlängerung oder die Garagenwanne übertragen wird. Dies kann einerseits durch einen Träger erreicht werden, welcher die übertragene kinetische Energie indirekt auf das Fahrgestell überträgt. Andererseits kann dies dadurch erzielt werden, dass in dem Heckbereich eine bevorzugt im Wesentlichen horizontal verlaufende Sollbruchstelle angeordnet wird, wobei ein unterer Teil des Heckbereichs, welcher unterhalb der Sollbruchstelle angeordnet ist, direkt oder indirekt mit dem Fahrgestell verbunden ist und ein oberer Teil des Heckbereichs, welcher oberhalb der Sollbruchstelle angeordnet ist, mit dem Möbelaufbau verbunden ist. Die Tatsache, dass die übertragene kinetische Energie komplett auf die Rahmenverlängerung oder die Garagenwanne übertragen wird, bewirkt, dass derjenige Teil des Campingfahrzeugs, welcher mit dem Möbelaufbau verbunden ist, keinen oder nur geringen Schaden nimmt. Dies reduziert insbesondere bei niederenergetischen Impacts die Reparaturkosten des Campingfahrzeugs erheblich.

Die Sicherheitsstruktur dient der Erhöhung einer Sicherheit bei einem Heckaufprall, zum Beispiel bei einem Auffahrunfall. Die Erhöhung der Sicherheit bedeutet insbesondere, dass die Insassen des Wohnmobils oder Wohnwagens aufgrund der Tatsache, dass der Möbelaufbau gar keinen oder nur sehr geringen Schaden nimmt, nicht oder sehr viel weniger von umherfliegenden Möbelteilen, Wand- oder Dachteilen oder damit verbundenen Gegenständen im Inneren des Campingfahrzeugs getroffen werden können.

Gemäß einer Ausführungsform weist das Verbindungselement ein erstes Deformationselement auf oder besteht aus diesem. Das erste Deformationselement ist bevorzugt energieabsorbierend. Dies verstärkt die Energieabsorption der Sicherheitsstruktur und erhöht somit dessen Sicherheitsaspekt.

Gemäß einer weiteren bevorzugten Ausführungsform ist auf dem Träger heckseitig ein zweites Deformationselement angeordnet. Dieses zweite Deformationselement ist bevorzugt energieabsorbierend. Dies verstärkt ebenfalls die Energieabsorption der Sicherheitsstruktur und erhöht somit ebenfalls dessen Sicherheitsaspekt.

Der Träger ist bevorzugt ein Metallteil oder weist Metall auf. Bevorzugt weist der Träger eine Metallstruktur auf, welche sich bei bestimmungsgemäßer Verwendung und bestimmungsgemäßer Anordnung von einer linken Seite zu einer rechten Seite der Heckstruktur erstreckt. Gemäß noch einer weiteren bevorzugten Ausführungsform ist der Träger ein Querträger. Der Querträger kann in verschiedenen Materialien und Produktionsprozessen hergestellt werden.

Es ist weiterhin bevorzugt, dass die Sicherheitsstruktur, insbesondere der Träger und/oder das Verbindungselement, mit einer Heckstruktur, insbesondere einer Heckwand, des Campingfahrzeugs verbunden ist bzw. sind. Dieses Merkmal erhöht die Stabilität der Verbindung des Verbindungselements zwischen dem Träger einerseits und der Rahmenverlängerung und/oder der Garagenwanne andererseits. Alternativ dazu kann die Sicherheitsstruktur, insbesondere der Träger und/oder das Verbindungselement, zumindest teilweise in eine Heckstruktur, insbesondere eine Heckwand, insbesondere in einen unteren Teil der Heckstruktur, insbesondere Heckwand, des Campingfahrzeugs integriert sein. Dieses Merkmal erhöht die Stabilität der Halterung der Sicherheitsstruktur. Die Integration des Trägers bzw. des Trägers mit dem Verbindungselement in die Struktur bzw. die Heckwand kann durch Umschäumen im Produktionsprozess erfolgen.

Die Heckwand kann mit bekannten Verfahren und Materialien hergestellt werden.

Gemäß einer anderen Ausführungsform ist die Sicherheitsstruktur, insbesondere der Träger und/oder das Verbindungselement in einem unteren Teil der Heckstruktur, insbesondere der Heckwand, angeordnet. Dies erleichtert eine Entkopplung der mit der Rahmenverlängerung verbundenen Sicherheitsstruktur und dem im oberen Bereich der Heckwand mit der Heckwand verbundenen Möbelaufbau.

Bevorzugt wird zur besseren Krafteinleitung in den Querträger der untere Teil der Heckstruktur, insbesondere der Heckwand, zumindest teilweise oder vollständig ausgeschäumt.

Bevorzugt ist die Sicherheitsstruktur, insbesondere der Träger und/oder das Verbindungselement, unterhalb eines Heckleuchtenträgers angeordnet.

Erfindungsgemäß weist die Heckstruktur, insbesondere die Heckwand, eine Sollbruchstelle auf.

Um eine Entkopplung zum Möbelaufbau herzustellen, ist weiterhin vorgesehen, eine Trenn- bzw. Sollbruchstelle in der Heckstruktur, insbesondere der Heckwand, einzufügen. Diese kann z.B. durch eine Trennung der Heckstruktur, insbesondere der Heckwand, realisiert werden oder durch eine definierte Materialreduktion oder Materialschwächung im Herstellungsprozess der Heckstruktur, insbesondere der Heckwand.

Hierbei ist die Sollbruchstelle der Heckstruktur, insbesondere der Heckwand, bevorzugt so positioniert, dass bei einem Heckaufprall ein oberer Teil der Heckstruktur, insbesondere der Heckwand, an welcher der Möbelaufbau befestigt oder abgestützt ist, zumindest teileweise erhalten bleibt.

Bevorzugt ist die Sollbruchstelle in einem unteren Teil der Heckstruktur, insbesondere der Heckwand, angeordnet. Der hier erwähnte untere Teil der Heckstruktur ist nicht notwendigerweise derselbe untere Teil der Heckstruktur, in dem sich die Sicherheitsstruktur befindet. Bevorzugt befindet sich die Sicherheitsstruktur unterhalb der Sollbruchstelle. Der untere Teil der Heckstruktur, insbesondere Heckwand, in dem die Sollbruchstelle angeordnet ist, befindet sich bevorzugt in der unteren Hälfte der Heckstruktur, insbesondere Heckwand. Es ist weiter bevorzugt, dass sich dieser untere Teil im unteren Drittel der Heckstruktur, insbesondere Heckwand, befindet. Es ist weiter bevorzugt, dass sich dieser untere Teil unterhalb eines oberen Endes eines Heckleuchtenträgers befindet.

Gemäß einer bevorzugten Ausführungsform verläuft zumindest ein Teil der Sollbruchstelle im Wesentlichen horizontal. Hierbei ist es weiter bevorzugt, dass die Sollbruchstelle auf einem im wesentlichen ebenen Teil der Heckwand gerade, insbesondere horizontal, verläuft.

Gemäß noch einer weiteren Ausführungsform ist derjenigen Teil der Heckstruktur, insbesondere der Heckwand, welcher unterhalb der Sollbruchstelle angeordnet ist, direkt oder indirekt ausschließlich mit der Rahmenverlängerung oder der Garagenwanne befestigt ist. Alternativ oder zusätzlich hierzu ist derjenigen Teil der Heckstruktur, insbesondere der Heckwand, welcher unterhalb der Sollbruchstelle angeordnet ist, nicht mit einer Aufhängung des Möbelaufbaubereichs befestigt. Hierdurch wird die Entkopplung zwischen dem Deformationsbereich und dem Möbelaufbaubereich erreicht. Hierbei ist es ebenfalls bevorzugt, dass zur besseren Krafteinleitung in den Querträger der untere Teil der Heckstruktur, insbesondere der Heckwand, zumindest teilweise oder vollständig ausgeschäumt ist.

Es ist ferner bevorzugt, dass eine Tür in einer Seitenwand der Wohnzelle des Wohnmobils, welche Zugang oder Zugriff zur Stauraumwanne oder Garagenwanne ermöglicht, möglichst nahe an der Heckwand angeordnet ist, damit eine Trennung zwischen dieser Tür und der Heckwand als definierte Sollbruchstelle genutzt werden kann, wodurch eine Entkopplung der Seitenwand der eingeleiteten Kräften entsteht. Hierbei kann eine Aufnahme für diese Tür in die Heckwand integriert sein. Somit wird vorliegend unter dem Ausdruck "möglichst nahe der Heckwand" ein Abstand von bis zu wenigen Zentimetern verstanden.

Ein Ausführungsbeispiel der Erfindung ist in den Zeichnungen dargestellt und wird in der nachfolgenden Beschreibung näher erläutert.
Fig. 1 zeigt eine schematische Draufsicht einer in eine Heckwand integrierte Sicherheitsstruktur gemäß einem Ausführungsbeispiel der Erfindung;
Fig. 2 zeigt eine schematische Seitenansicht einer in eine Heckwand integrierte Sicherheitsstruktur gemäß dem Ausführungsbeispiel der Erfindung;
Figur 3 illustriert eine Heckwand mit einer Sollbruchstelle gemäß dem Ausführungsbeispiel der Erfindung; und
Figur 4 illustriert die Anordnung einer Tür in einer Seitenwand der Wohnzelle des Campingfahrzeugs relativ zur Heckwand gemäß dem Ausführungsbeispiel der Erfindung.

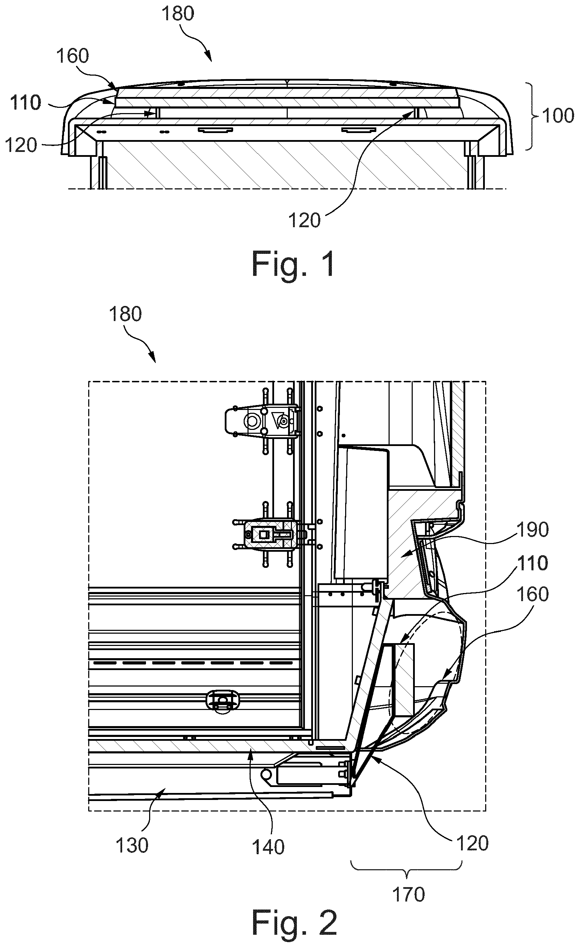

In Figur 1 ist die Sicherheitsstruktur 100 eines Campingfahrzeugs 180 abgebildet, welche einen Querträger 110 und zwei Verbindungselemente 120 aufweist. Die Verbindungselemente 120 weisen jeweils nicht abgebildete energieabsorbierende erste Deformationselemente auf. Auf dem Querträger 110 ist heckseitig ein energieabsorbierendes zweites Deformationselement 160 angeordnet. Die Verbindungselemente 120 sind einerseits am Querträger 110 und andererseits an einer Garagenwanne 140 befestigt.

In Figur 2 ist dargestellt, dass die Verbindungselemente 120 sowohl an der Rahmenverlängerung 130 als auch an der oberhalb der Rahmenverlängerung 130 angeordneten Garagenwanne 140 innerhalb einer Heckwand 170 befestigt sind. Man erkennt weiterhin, dass der Querträger 110 sowie die Verbindungselemente 120 in dem sie umgebenden Freiraum umschäumt sind, wobei der verwendete Schaum das auf dem Querträger 110 angeordnete zweite Deformationselement 160 bildet. Der Querträger 110 und die Verbindungselemente 120 sind unterhalb des Heckleuchtenträgers 190 angeordnet.

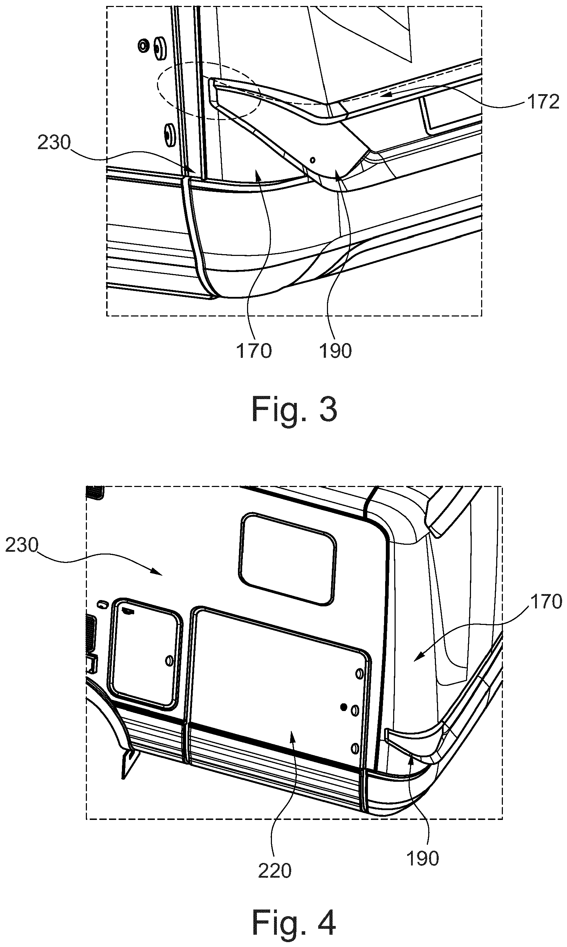

Figur 3 zeigt eine Heckwand 170 mit einer Sollbruchstelle 172. Die Sollbruchstelle 172 verläuft in einer Mitte der Heckwand 170 horizontal und im Bereich des Heckleuchtenträgers 190 entlang einer oberen Kontur des Heckleuchtenträgers 190 bis zu einer Seitenwand 230 der Wohnzelle des Campingfahrzeuges 180, siehe die in Figur 3 dargestellte Ellipse. Von diesem Punkt ausgehend kann die Sollbruchstelle 172 entlang der Seitenwand 230 nach unten verlaufen, siehe Ellipse in Figur 4. Die Sollbruchstelle 172 wird in diesem Bereich dadurch gebildet, dass zwischen der Heckwand 170 und einer Tür 220 in der Seitenwand 230, welche Zugang oder Zugriff zur Stauraumwanne oder Garagenwanne 140 ermöglicht, lediglich ein dünner Streifen der Seitenwand 230 angeordnet ist, welcher somit bevorzugt bricht.

## Patentansprüche

1. Campingfahrzeug mit einer in seinem Heckbereich angeordneten Sicherheitsstruktur aufweisend einen Träger (110) und ein Verbindungselement (120), wobei das Verbindungselement (120) den Träger (110) an einer Rahmenverlängerung (130) und/oder an einer Garagenwanne (140) befestigt, wobei die Sicherheitsstruktur (100), insbesondere der Träger (110) und/oder das Verbindungselement (120), mit einer Heckstruktur, insbesondere Heckwand (170), des Campingfahrzeugs (180) verbunden ist oder zumindest teilweise in eine Heckstruktur, insbesondere Heckwand (170), insbesondere in einen unteren Teil der Heckstruktur, insbesondere Heckwand (170), des Campingfahrzeugs (180) integriert ist,
**dadurch gekennzeichnet,**
**dass** die Heckstruktur, insbesondere die Heckwand (170), eine Sollbruchstelle (172) aufweist.

2. Campingfahrzeug nach Anspruch 1,
**dadurch gekennzeichnet,**
**dass** das Verbindungselement (120) ein insbesondere energieabsorbierendes erstes Deformationselement aufweist.

3. Campingfahrzeug nach Anspruch 1 oder 2,
**dadurch gekennzeichnet,**
**dass** auf dem Träger (110) heckseitig ein insbesondere energieabsorbierendes zweites Deformationselement (160) angeordnet ist.

4. Campingfahrzeug nach einem der vorangegangenen Ansprüche,
**dadurch gekennzeichnet,**
**dass** der Träger (110) ein Querträger (110) ist.

5. Campingfahrzeug nach einem der vorangegangenen Ansprüche,
**dadurch gekennzeichnet,**
**dass** die Sicherheitsstruktur (100), insbesondere der Träger (110) und/oder das Verbindungselement (120), in einem unteren Teil der Heckstruktur, insbesondere Heckwand (170), angeordnet ist.

6. Campingfahrzeug nach einem der vorhergehenden Ansprüche,
**dadurch gekennzeichnet,**
**dass** die Sicherheitsstruktur (100), insbesondere der Träger (110) und/oder das Verbindungselement (120), unterhalb eines Heckleuchtenträgers (190) angeordnet ist.

7. Campingfahrzeug nach einem der vorhergehenden Ansprüche,
**dadurch gekennzeichnet,**
**dass** zumindest ein Teil der Sollbruchstelle (172) im Wesentlichen horizontal verläuft.

8. Campingfahrzeug nach einem der vorhergehenden Ansprüche,
**dadurch gekennzeichnet,**
**dass** derjenige Teil der Heckstruktur, insbesondere der Heckwand (170), welcher unterhalb der Sollbruchstelle (172) angeordnet ist, direkt oder indirekt ausschließlich an der Rahmenverlängerung (130) oder der Garagenwanne (140) befestigt ist.

## Claims

1. A camping vehicle with a safety structure arranged in its rear region, comprising a support (110) and a connecting element (120), wherein the connecting element (120) fastens the support (110) to a frame extension (130) and/or to a garage tub (140), wherein the safety structure (100), in particular the support (110) and/or the connecting element (120), is connected to a rear structure, in particular rear wall (170), of the camping vehicle (180) or is at least partially integrated into a rear structure, in particular rear wall (170), of the camping vehicle (180), in particular into a lower part of the rear structure, in particular rear wall (170), of the camping vehicle (180),
**characterised in that**
the rear structure, in particular the rear wall (170), has a predetermined breaking point (172).

2. The camping vehicle according to claim 1,
**characterised in that**
the connecting element (120) comprising a first deformation element which is in particular energy-absorbing.

3. The camping vehicle according to claim 1 or 2,
**characterised in that**
a second deformation element (160), in particular an energy-absorbing deformation element, is arranged at the rear on the support (110).

4. The camping vehicle according to one of the preceding claims,
**characterised in that**
the support (110) is a cross member (110).

5. The camping vehicle according to one of the preceding claims,
**characterised in that**
the safety structure (100), in particular the support (110) and/or the connecting element (120), is arranged in a lower part of the rear structure, in particular rear wall (170).

6. The camping vehicle according to one of the preceding claims,
**characterised in that**
the safety structure (100), in particular the support (110) and/or the connecting element (120), is arranged below a rear light carrier (190).

7. The camping vehicle according to one of the preceding claims,
**characterised in that**
at least a part of the predetermined breaking point (172) extends substantially horizontally.

8. The camping vehicle according to one of the preceding claims,
**characterised in that**
that part of the rear structure, in particular of the rear wall (170) which is arranged below the predetermined breaking point (172), is attached directly or indirectly exclusively to the frame extension (130) or the garage tub (140).

## Revendications

1. Véhicule de camping comprenant une structure de sécurité agencée dans sa zone arrière présentant une poutre (110) et un élément de liaison (120), dans lequel l'élément de liaison (120) fixe la poutre (110) au niveau d'une extension de châssis (130) et/ou d'un bac de soute (140), dans lequel la structure de sécurité (100), en particulier la poutre (110) et/ou l'élément de liaison (120), est reliée à une structure arrière, en particulier une paroi arrière (170), du véhicule de camping (180) ou est intégrée au moins en partie dans une partie inférieure de la structure arrière, en particulier d'une paroi arrière (170), du véhicule de camping (180),
**caractérisé en ce que**
la structure arrière, en particulier la paroi arrière (170), présente un point destiné à la rupture (172).

2. Véhicule de camping selon la revendication 1,
**caractérisé en ce que**
l'élément de liaison (120) présente un premier élément de déformation en particulier absorbant l'énergie.

3. Véhicule de camping selon la revendication 1 ou 2,
**caractérisé en ce que**
un second élément de déformation en particulier absorbant l'énergie (160) est agencé sur la poutre (110).

4. Véhicule de camping selon l'une quelconque des revendications précédentes,
**caractérisé en ce que**
la poutre (110) est une poutre transversale (110).

5. Véhicule de camping selon l'une quelconque des revendications précédentes,
**caractérisé en ce que**
la structure de sécurité (100), en particulier la poutre (110) et/ou l'élément de liaison (120), est agencée dans une partie inférieure de la structure arrière, en particulier de la paroi arrière (170).

6. Véhicule de camping selon l'une quelconque des revendications précédentes,
**caractérisé en ce que**
la structure de sécurité (100), en particulier la poutre (110) et/ou l'élément de liaison (120), est agencée en dessous d'une poutre à feux arrière (190).

7. Véhicule de camping selon l'une quelconque des revendications précédentes,
**caractérisé en ce que**
au moins une partie du point destiné à la rupture (172) s'étend sensiblement horizontalement.

8. Véhicule de camping selon l'une quelconque des revendications précédentes,
**caractérisé en ce que**
la partie de la structure arrière, en particulier de la paroi arrière (170), qui est agencée en dessous du point destiné à la rupture (172), est fixée de manière directe ou indirecte exclusivement à l'extension de châssis (130) ou au bac de soute (140).
